(19) Europäisches Patentamt

European Patent Office

Office européen des brevets

(11) Veröffentlichungsnummer: **0 483 154 B1**

(12) **EUROPÄISCHE PATENTSCHRIFT**

(45) Veröffentlichungstag der Patentschrift: **27.07.94**

(21) Anmeldenummer: **90906862.9**

(22) Anmeldetag: **03.05.90**

(86) Internationale Anmeldenummer:
**PCT/DE90/00324**

(87) Internationale Veröffentlichungsnummer:
**WO 91/02219 (21.02.91 91/05)**

(51) Int. Cl.⁵: **G01D 3/04**, G01L 1/22,
H03F 1/30

(54) **SCHALTUNGSANORDNUNG ZUR TEMPERATURSTABILEN VERSTÄRKUNG EINER DIFFERENZSPANNUNG.**

(30) Priorität: **27.07.89 DE 3925177**

(43) Veröffentlichungstag der Anmeldung:
**06.05.92 Patentblatt 92/19**

(45) Bekanntmachung des Hinweises auf die
Patenterteilung:
**27.07.94 Patentblatt 94/30**

(84) Benannte Vertragsstaaten:
**AT BE CH DE DK ES FR GB IT LI LU NL SE**

(56) Entgegenhaltungen:
**DE-A- 3 534 050**
**DE-B- 2 453 704**
**GB-A- 2 093 195**

**Patent Abstracts of Japan, vol. 74, no. 5**
**(E-057), 16 May 1981 & JP-A-56 023006**

**Patent Abstracts of Japan, vol. 10, no. 294**
**(P-504)(2350), 7 October 1986 & JP-A-61**
**111436**

(73) Patentinhaber: **SIEMENS AKTIENGESELL-**
**SCHAFT**
**Wittelsbacherplatz 2**
**D-80333 München(DE)**

(72) Erfinder: **SCHULZ, Winfried**
**Kurfürstenstrasse 29**
**D-1000 Berlin 42(DE)**

## Beschreibung

Die Erfindung bezieht sich auf eine Schaltungsanordnung zur temperaturstabilen Verstärkung einer Differenzspannung, die sich aus der Differenz von an zwei verschiedenen Eingangsanschlüssen liegenden Gleichspannungen gegen ein gemeinsames Bezugspotential ergibt.

Beispielsweise zur Messung von Druck oder Druckdifferenzen auf elektrischem Wege werden häufig Brückenschaltungen aus Widerständen benutzt, die durch den Druck in ihrem Widerstandswert verändert werden. Solche Brückenschaltungen sind häufig in Form von piezoresistiven Widerstandsbrücken als Sensorelement auf einer Silizium-Membran ausgeführt. An der Eingangsdiagonale derartiger Brückenschaltungen liegt häufig eine Gleichspannung nach Bezugspotential; an den Enden der Ausgangsdiagonale ergeben sich dann zwei Gleichspannungen nach Bezugspotential, die sich als eine Differenzspannung an der Ausgangsdiagonale darstellen. Bei praktisch ausgeführten Druckmeßgeräten mit piezoresistiver Widerstandsbrücke kann die Differenzspannung an der Ausgangsdiagonale der Brückenschaltung beim Nenndruck bei etwa 20 mV liegen. Zur Weiterverarbeitung dieser Spannung ist eine temperaturstabile Verstärkung erforderlich, was unter Anwendung von teuren Präzisions-Operationsverstärkern erreichbar ist. Das Ziel einer temperaturstabilen Verstärkung wird dabei dadurch erschwert, daß die Verstärker einen relativ hochohmigen Eingangswiderstand aufweisen müssen.

Der Erfindung liegt daher die Aufgabe zugrunde, eine Schaltungsanordnung zur temperaturstabilen Verstärkung einer Differenzspannung anzugeben, mit der sich mit geringem Aufwand eine temperaturstabile sowie fehlerfreie Verstärkung der Differenzspannung erzielen läßt.

Zur Lösung dieser Aufgabe ist bei einer Schaltungsanordnung der eingangs angegebenen Art erfindungsgemäß ein Eingang eines Verstärkers über einen ersten Umschalter abwechselnd einerseits mit einem Eingangsanschluß und andererseits mit dem Ausgang eines weiteren Verstärkers mit der Verstärkung eins und ein anderer Eingang des einen Verstärkers über einen zweiten Umschalter abwechselnd einerseits mit einem anderen Eingangsanschluß und andererseits über einen Widerstand mit dem Ausgang des weiteren Verstärkers verbindbar, wobei ein Eingang des weiteren Verstärkers mit dem einen Eingangsanschluß und ein anderer Eingang des weiteren Verstärkers mit dem Ausgang dieses Verstärkers verbunden ist; der Ausgang des einen Verstärkers ist über einen dritten Umschalter abwechselnd einerseits unter phasenrichtiger Gleichrichtung an einen einem Emitterfolger parallel vorgeordneten Kondensator und andererseits an Bezugspotential anschließbar, und der Emitterfolger ist mit seinem Kollektoranschluß über den Widerstand an den Ausgang des weiteren Verstärkers angeschlossen, und an dem Emitterwiderstand ist eine der Differenzspannung entsprechende, verstärkte Ausgangsspannung abnehmbar.

Ein wesentlicher Vorteil der erfindungsgemäßen Schaltungsanordnung besteht darin, daß mit ihr unter Anwendung preiswerter Digital- und Analogbausteine eine temperaturstabile Verstärkung der Differenzspannung erreichbar ist; dies gilt insbesondere dann, wenn die Schaltungsanordnung in bekannter Dickschichttechnik ausgeführt wird. Ein weiterer Vorteil der erfindungsgemäßen Schaltungsanordnung wird darin gesehen, daß im Gleichgewichtszustand beim Schalten des ersten und des zweiten Umschalters keine nennenswerten Störimpulse entstehen, weil die belegbaren Kontakte dieser Umschalter dann auf gleichem Potential liegen; die verstärkte Differenzspannung ist dann nicht durch Störimpulse fehlerbehaftet.

Es ist zwar aus der DE 35 34 050 A1 eine Meßwerterfassungseinrichtung bekannt, die mit ihren beiden Eingangsanschlüssen an einer Differenzspannung liegt, jedoch ist hier die Differenzspannung eine Wechselspannung, weil eine vorgeordnete Brückenschaltung mit einer aus einer Gleichspannung gewonnenen Wechselspannung gespeist ist. Die bekannte Meßwerterfassungseinrichtung enthält eingangsseitig einen Verstärker, dessen einer Eingang über einen ersten Umschalter abwechselnd einerseits mit einem Eingangsanschluß und andererseits über einen Vergleichswiderstand mit einem Schaltungspunkt verbindbar ist; dieser Schaltungspunkt ist außerdem mit dem anderen Eingang des Verstärkers verbindbar, weil dieser Eingang über einen zweiten Umschalter abwechselnd einerseits mit dem anderen Eingangsanschluß und andererseits über einen Widerstand mit dem Schaltungspunkt verbindbar ist. Die bekannte Meßwerterfassungseinrichtung enthält ferner eine Steueranordnung mit einen dritten Umschalter, über den der Ausgang des Verstärkers abwechselnd einerseits unter phasenrichtiger Gleichrichtung an einen einem Emitterfolger parallel vorgeordneten Kondensator und andererseits an Bezugspotential anschließbar ist. Der Emitterfolger ist mit seinem Kollektoranschluß über den Vergleichswiderstand mit dem oben erwähnten Schaltungspunkt verbunden; an dem Emitterwiderstand ist eine verstärkte Ausgangsspannung abnehmbar. Diese ist allerdings wegen der Wechselspannungsspeisung der vorgeordneten Brückenschaltung nur halb so groß wie bei Verwendung der erfindungsgemäßen Schaltungsanordnung.

Bei der erfindungsgemäßen Schaltungsanordnung kann der Emitterfolger in unterschiedlicher Weise ausgebildet sein. Im Hinblick auf die erzielbare hohe Verstärkung wird die Verwendung einer Darlington-Stufe als Emitterfolger bevorzugt.

Der eine Verstärker der erfindungsgemäßen Schaltungsanordnung ist über einen Koppelkondensator mit dem dritten Umschalter verbunden und der Koppelkondensator ist über den dritten Umschalter an Bezugspotential über eine Diodenanordnung anschließbar, an der eine Hilfsgleichspannung liegt. Mittels der Diodenanordnung wird die durch die Diodenstrecken des Emitterfolgers bzw. der Darlington-Stufe gegebene Totzone kompensiert. Grundsätzlich ist es aber auch möglich, durch den Umschalter eine unmittelbare Verbindung des dem einen Verstärker nachgeordneten Koppelkondensators mit dem Bezugspotential herzustellen.

Bezüglich der Ausgestaltung der Umschalter wird es als vorteilhaft erachtet, wenn diese Halbleiter-Schalter sind und von einem einzigen Oszillator gesteuert sind, damit alle Umschalter im gleichen Takt betätigt werden können.

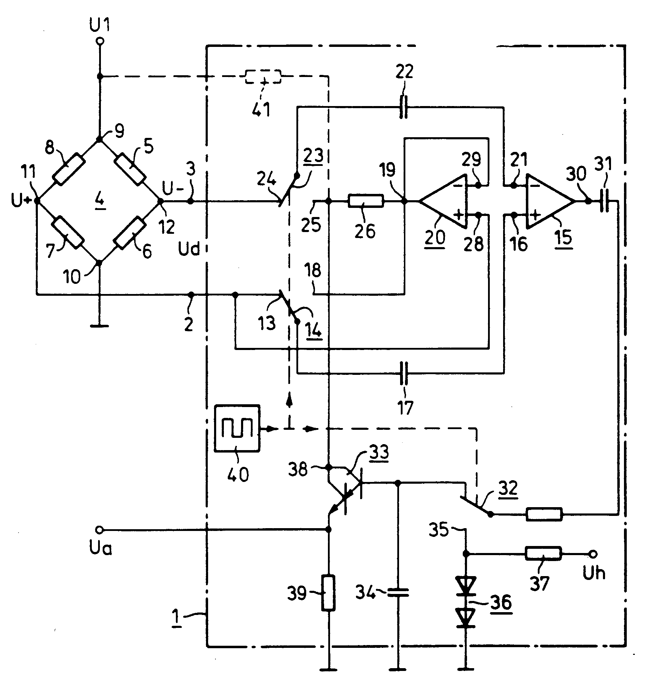

Zur Erläuterung der Erfindung ist in der Figur ein Ausführungsbeispiel der erfindungsgemäßen Schaltungsanordnung dargestellt.

Gemäß dem gezeigten Ausführungsbeispiel ist der Schaltungsanordnung 1 zur hochstabilen Verstärkung einer Differenzspannung an Eingangsanschlüssen 2 und 3 eine Brückenschaltung 4 vorgeordnet, bei der es sich um eine piezoresistive Widerstandsbrücke als Sensorelement auf einer nicht dargestellten Silizium-Membran handeln kann. Die Brückenschaltung 4 enthält vom Druck in ihrem Widerstandswert veränderbare Widerstände 5 bis 8. An die von Schaltungspunkten 9 und 10 gebildete Eingangsdiagonale der Brückenschaltung 4 liegt eine Gleichspannung U1 nach Bezugspotential.

Bei einer Verstimmung der Brückenschaltung 4 infolge einer Beaufschlagung mit einem zu messenden Druck ergibt sich an einem Schaltungspunkt 11 der Ausgangsdiagonale der Brückenschaltung 4 beispielsweise eine Spannung U + und an einem Schaltungspunkt 12 der Ausgangsdiagonale eine Spannung U-. Demzufolge liegt an den Eingangsanschlüssen 2 und 3 der Schaltungsanordnung 1 eine Differenzspannung Ud, die sich aus der Differenz der Spannungen U + und U-nach Bezugspotential ergibt.

Mit dem einen Eingangsanschluß 2 der Schaltungsanordnung 1 ist ein belegbarer Kontakt 13 eines ersten Umschalters 14 verbunden. Über diesen ersten Umschalter 14 ist ein Verstärker 15 mit seinem einen Eingang 16 über einen Koppelkondensator 17 in der gezeigten Stellung des Umschalters mit dem einen Eingangsanschluß 2 verbunden. Dieser Verstärker 15 ist über ein nicht dargestelltes Widerstandsnetzwerk auf eine Verstärkung v von etwa 1000 eingestellt, wobei die Eingangsimpedanzen symmetrisch gehalten sind.

In der anderen Schaltstellung des Umschalters 14, wenn also dessen Kontakt 18 belegt ist, ist der eine Eingang 16 mit einem Ausgang 19 eines weiteren Verstärkers 20 verbunden.

Mit seinem anderen Eingang 21 ist der eine Verstärker 15 über einen weiteren Koppelkondensator 22 über einen zweiten Umschalter 23 in der gezeigten Stellung über den dann belegten Kontakt 24 mit dem anderen Eingangsanschluß 3 verbunden. In der nicht gezeigten Stellung des zweiten Umschalters 23, wenn also dessen Kontakt 25 belegt ist, besteht eine Verbindung des anderen Eingangs 21 des einen Verstärkers 15 über einen Widerstand 26 mit dem Ausgang 19 des weiteren Verstärkers 20.

Der weitere Verstärker 20 mit einer Verstärkung von eins ist hinsichtlich seines einen Eingangs 28 direkt mit dem einen Eingangsanschluß 2 verbunden und hinsichtlich seines anderen Einganges 29 unmittelbar mit seinem Ausgang 19.

Der Ausgang 30 des einen Verstärkers 15 ist über einen Koppelkondensator 31 und über einen dritten Umschalter 32 in der gezeigten Stellung des Umschalters 32 mit einem Emitterfolger in Form einer Darlington-Stufe 33 verbunden, wobei der Darlington-Stufe 33 ein Kondensator 34 vorgeordnet ist, der von dem einen Verstärker 15 taktweise aufladbar ist. In der nicht gezeigten Stellung des dritten Umschalters 32 ist der Koppelkondensator 31 am Ausgang des einen Verstärkers 15 über den dann belegten Kontakt 35 und eine Diodenanordnung 36 aus zwei Dioden mit Bezugspotential verbunden. An die Diodenanordnung ist über einen Widerstand 37 eine Hilfsgleichspannung Uh angelegt.

Die Darlington-Stufe 33 ist mit ihrem Kollektoranschluß 38 über den Widerstand 26 ebenfalls mit dem Ausgang 19 des weiteren Verstärkers 20 verbunden; am Emitterwiderstand 39 der Darlington-Stufe 33 ist dann eine Spannung Ua abnehmbar, die eine verstärkte Spannung der Differenzspannung Ud darstellt.

Die Umschalter 14, 23 und 32 der dargestellten Schaltungsanordnung sind vorzugsweise als CMOS-Schalter ausgeführt und werden über die in der Figur strichliert dargestellten Verbindungen von einem gemeinsamen Oszillator 40 angesteuert, so daß alle Umschalter im gleichen Takt betätigt werden.

Die dargestellte Schaltungsanordnung arbeitet in folgender Weise:

Liegt an den Eingangsanschlüssen 2 und 3 eine Differenzspannung Ud an, dann tritt an den belegbaren Kontakten 13 und 18 des ersten Umschalters 14 gleiches Potential auf, weil der weitere Verstärker 20 mit seinem einen Eingang 28 an den einen Eingangsanschluß 2 angeschlossen ist und eine Verstärkung von eins aufweist. Demzufolge ergibt sich beim Umlegen des Umschalters 14 kein nennenswerter Störimpuls. Bis auf einen kleinen Offset des weiteren Verstärkers 20 liegen also die beiden belegbaren Kontakte 13 und 18 des Umschalters 14 potentialmäßig auf dem Potential des einen Eingangsanschlusses 2.

Am zweiten Umschalter 23 bzw. an dessen belegbaren Kontakten 24 und 25 tritt dagegen die volle Differenzspannung Ud auf, weil der belegbare Kontakt 25 auf dem Potential des einen Einganganschlusses 2 liegt. Es wird in dem einen Verstärker 15 die volle Differenzspannung Ud verstärkt und mittels des dritten Umschalters 32 phasenrichtig gleichgerichtet. An dem der Darlington-Stufe 33 vorgeordneten Kondensator 34 baut sich somit eine Gleichspannung auf, die infolge des Emitterwiderstandes 39 einen eingeprägten Strom durch den Widerstand 26 treibt.

Die dargestellte Schaltung hat ihren Gleichgewichtszustand erreicht, wenn an den belegbaren Kontakten 24 und 25 des zweiten Umschalters 23 gleiches Potential vorhanden ist; beim Schalten des zweiten Umschalters treten dann ebenfalls keine nennenswerten Störimpulse auf. Geht man von einer ausreichend hohen Schleifenverstärkung v von etwa 1000 aus, dann gilt:

$$Ud = \frac{R_{26}}{R_{39}} \cdot Ua,$$

wobei $R_{26}$ den Wert des Widerstandes 26 und $R_{39}$ den Wert des Widerstandes 39 bezeichnet. Aus obiger Gleichung läßt sich dann auch die Beziehung herleiten:

$$\frac{Ua}{Ud} = \frac{R_{39}}{R_{26}}.$$

Dies bedeutet, daß die Verstärkungs- und Nullpunktdriften der beiden Verstärker 15 und 20 sowie der Darlington-Stufe 33 keinen Einfluß auf die Signalverstärkung haben, wodurch eine Schaltungsanordnung mit temperaturstabiler Verstärkung geschaffen ist. Auch die Genauigkeit beeinflussende Störimpulse durch das Betätigen der Umschalter sind weitgehend vermieden. Darüber hinaus ist durch das angewendete Kompensationsprinzip eine besondere Hochohmigkeit der Differenzeingänge erreicht, was einen weiteren Vorteil darstellt.

Für den Fall, daß sich die Differenzspannung während der Messung umpolt, ist es zweckmäßig, den Nullpunkt der Schaltungsanordnung anzuheben. Dies läßt sich bei konstanter Spannung U1 durch einen strichliert eingezeichneten Widerstand 41 erreichen.

**Patentansprüche**

1. Schaltungsanordnung zur temperaturstabilen Verstärkung einer Differenzspannung (Ud), die sich aus der Differenz von an zwei verschiedenen Eingangsanschlüssen (2,3) liegenden Gleichspannungen gegen ein gemeinsames Bezugspotential ergibt,
   **dadurch gekennzeichnet,**
   daß ein Eingang (16) eines Verstärkers (15) über einen ersten Umschalter (14) abwechselnd einerseits mit einem Eingangsanschluß (2) und andererseits mit dem Ausgang (19) eines weiteren Verstärkers (20) mit einer Verstärkung von eins und ein anderer Eingang (21) des einen Verstärkers (16) über einen zweiten Umschalter (23) abwechselnd einerseits mit einem anderen Eingangsanschluß (3) und andererseits über einen Widerstand (26) mit dem Ausgang (19) des weiteren Verstärkers (20) verbindbar ist, daß ein Eingang (28) des weiteren Verstärkers (20) mit dem einen Eingangsanschluß (2) und ein anderer Eingang (29) des weiteren Verstärkers (20) mit dem Ausgang (19) dieses Verstärkers (20) verbunden ist, daß der Ausgang (30) des einen Verstärkers (15) über einen dritten Umschalter (32) abwechselnd einerseits unter phasenrichtiger Gleichrichtung an einen einem Emitterfolger (33) parallel vorgeordneten Kondensator (34) und andererseits an Bezugspotential anschließbar ist und daß der Emitterfolger (33) mit seinem Kollektoranschluß (38) über den Widerstand (26) an den Ausgang (19) des weiteren Verstärkers (20) angeschlossen ist und an dem Emitterwiderstand (39) eine der Differenzspannung entsprechende, verstärkte Ausgangsspannung (Ua) abnehmbar ist.

2. Schaltungsanordnung nach Anspruch 1,
   **dadurch gekennzeichnet,**
   daß der Emitterfolger als Darlington-Stufe (33) ausgebildet ist.

3. Schaltungsanordnung nach Anspruch 1 oder 2,
   **dadurch gekennzeichnet,**
   daß ein dem Ausgang (30) des einen Verstärkers (15) nachgeordneter Koppelkondensator (31) über den dritten Umschalter (32) an Bezugspotential über eine Diodenanordnung (36) anschließbar ist, an der eine Hilfsgleichspannung (Uh) liegt.

4. Schaltungsanordnung nach einem der vorangehenden

Ansprüche, **dadurch gekennzeichnet,**
daß die Umschalter (14,23,32) Halbleiter-Schalter sind und von einem einzigen Oszillator (40) gesteuert sind.

**Claims**

1. A circuit arrangement for the temperature-stable amplification of a differential voltage (Ud) which results from the difference between d.c. voltages, prevailing at two different input terminals (2, 3), relative to a common reference potential, characterised in that one input (16) of an amplifier (15) can be connected via a first change-over switch (14) alternately on the one hand to an input terminal (2) and on the other hand to the output (19) of a further amplifier (20) with an amplification factor of one, and another input (21) of the first amplifier (16) can be connected via a second change-over switch (23) alternately on the one hand to another input terminal (3) and on the other hand via a resistor (26) to the output (19) of the further amplifier (20), that one input (28) of the further amplifier (20) is connected to the first input terminal (2) and another input (29) of the further amplifier (20) is connected to the output (19) of this amplifier (20), that the output (30) of the first amplifier (15) can be connected via a third change-over switch (32) alternately on the one hand, with in-phase rectification, to a capacitor (34) which is connected at the input end of an emitter follower (33) in parallel, and on the other hand to reference potential, and that the emitter follower (33) is connected by its collector terminal (38) via the resistor (26) to the output (19) of the further amplifier (20) and an amplified output voltage (Ua) corresponding to the differential voltage can be obtained from the emitter resistor (39).

2. A circuit arrangement as claimed in Claim 1, characterised in that the emitter follower is designed as a Darlington stage (33).

3. A circuit arrangement as claimed in Claim 1 or 2, characterised in that a coupling capacitor (31) connected following the output (30) of the first amplifier (15) can be connected by means of the third change-over switch (32) to reference potential via a diode arrangement (36) to which an auxiliary d.c. voltage (Uh) is connected.

4. A circuit arrangement as claimed in one of the preceding claims, characterised in that the change-over switches (14, 23, 32) are semiconductor switches and are controlled by one single oscillator (40).

**Revendications**

1. Montage pour amplifier, d'une manière stable en température, une tension (Ud) différentielle, qui est obtenue à partir de la différence de tensions continues présentes sur deux bornes d'entrée (2, 3) différentes, par rapport à un potentiel de référence commun,
    caractérisé en ce que
une entrée (16) d'un amplificateur (15) peut être reliée par l'intermédiaire d'un premier commutateur (14) alternativement d'une part à une borne (2) d'entrée et d'autre part à la sortie (19) d'un autre amplificateur (20) de gain égal à un, et une autre entrée (21) de l'un (15) des amplificateurs peut être reliée par l'intermédiaire d'un second commutateur (23) alternativement d'une part à une autre borne (3) d'entrée et d'autre part, par l'intermédiaire d'une résistance (26) à la sortie (19) de l'autre amplificateur (20), une entrée (28) de l'autre amplificateur (20) est reliée à l'une (2) des bornes d'entrée et une autre entrée (29) de l'autre amplificateur (20) est reliée à la sortie (19) de cet amplificateur (20), la sortie (30) de l'un (15) des amplificateurs peut être reliée par l'intermédiaire d'un troisième commutateur (32) alternativement d'une part, par redressement effectif en phase, à un condensateur (34) branché en amont et en parallèle à un émetteur (33) suiveur, et d'autre part au potentiel de référence, et l'émetteur (33) suiveur est connecté, par sa borne (38) de collecteur, à la sortie (19) de l'autre amplificateur (20) par l'intermédiaire de la résistance (26) et une tension (Ua) de sortie amplifiée, qui correspond à la tension différentielle, peut être prélevée sur la résistance (39) d'émetteur.

2. Montage suivant la revendication 1,
    caractérisé en ce que
    l'émetteur suiveur a la forme d'un étage Darlington (33).

3. Montage suivant la revendication 1 ou 2,
    caractérisé ence que
    un condensateur (31) de couplage, branché en aval de la sortie (30) de l'un (15) des amplificateurs peut être relié, par l'intermédiaire du troisième commutateur (32), au potentiel de référence par l'intermédiaire d'un dispositif (36) à diodes, auquel est appliquée une tension (Uh) continue auxiliaire.

4. Montage suivant l'une des revendications précédentes,

caractérisé en ce que

les commutateurs (14, 23, 32) sont des commutateurs à semiconducteurs et sont commandés par un seul oscillateur (40).